# EUROPEAN PATENT APPLICATION

(11) **EP 4 216 251 A1**
(43) Date of publication of application: **26.07.2023**
(21) Application number: 22817507.1
(22) Date of filing: 26.08.2022
(51) Int. Cl.: H01H 13/705, G06F 3/02

(54) **KEYBOARD AND ELECTRONIC DEVICE**

(30) Priority: 07.12.2021 CN 202111487805
(71) Applicant: Honor Device Co., Ltd., Shenzhen, Guangdong 518040 (CN)
(72) Inventor: XIE, Songyou, Shenzhen, Guangdong 518040 (CN); YANG, Lining, Shenzhen, Guangdong 518040 (CN); ZHANG, Zhen, Shenzhen, Guangdong 518040 (CN); REN, Xiaolong, Shenzhen, Guangdong 518040 (CN)
(74) Representative: Gill Jennings & Every LLP
(86) International application number: PCT/CN2022/115064
(87) International publication number: WO 2023/103465

(57) **Abstract**

The embodiments of this application provide a keyboard, including a keyboard base and a key, and the key includes a keycap and a key holder, where the keyboard further includes a driving portion, and the driving portion includes a driving board, a first mating member, and a second mating member, where the first mating member and the second mating member are arranged on the driving board; the driving board moves in a first direction relative to the keyboard base through the second mating member; and the key includes a key mating member, and when moving in the first direction, the driving board drives the first mating member to move relative to the key mating member to drive the key to descend. The driving portion drives the key to descend, so that the height of the keyboard can be designed to be smaller, and when the keyboard is applied to the electronic device, the thickness of the electronic device can be reduced. For a single keyboard product, the reduced height of the keyboard also facilitates stacking during processing and transportation, thereby saving space.

## Description

This application claims priority to Chinese Patent Application No. 202111487805. X, entitled "KEYBOARD AND ELECTRONIC DEVICE", and filed with the China National Intellectual Property Administration on December 7, 2021, which is incorporated herein by reference in its entirety.

### TECHNICAL FIELD

This application relates to the field of electronic technologies, and in particular, to a keyboard and an electronic device.

### BACKGROUND

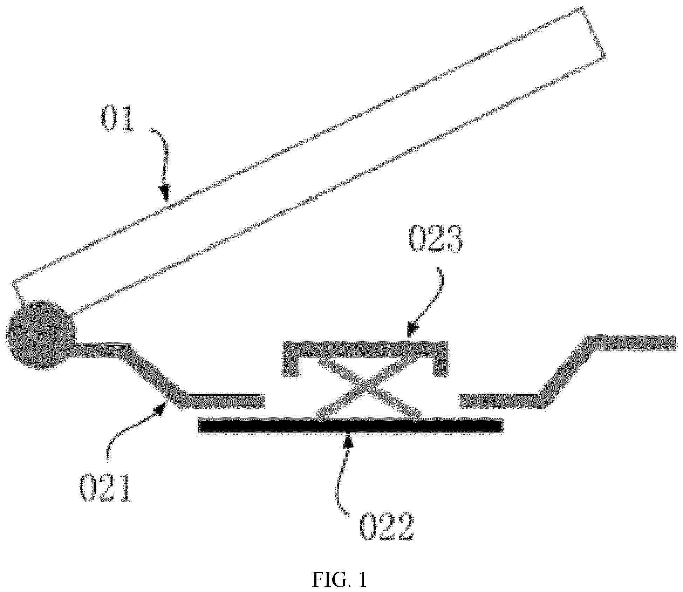

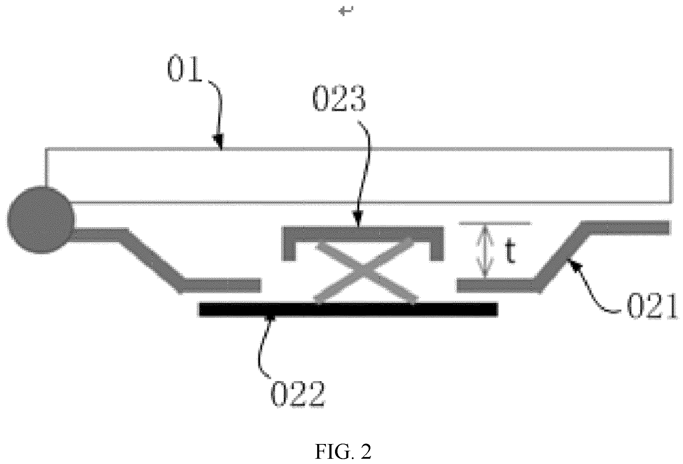

Referring to FIG. 1, FIG. 1 is a schematic diagram of a notebook computer in an open state; and FIG. 2 is a schematic structural diagram of the notebook computer in FIG. 1 in a closed state.

The notebook computer includes a display screen 01 and a keyboard 02. The keyboard 02 includes a keyboard base 022 and a keyboard panel 021, which are enclosed to form a housing of the keyboard. A plurality of keys 1 are mounted on the housing and each key 1 can ascend and descend. A press operation may be performed on the key 1, and after an external force pressing the key 1 is removed, the key 1 can be ejected and reset under an elastic force of an elastic portion (not shown in the figure). As shown in FIG. 1, the key 1 needs to protrude from the keyboard panel 021 to a certain height, so that a press operation may be performed on the key 1. As shown in FIG. 2, when the display screen 01 and the keyboard panel 021 are closed, in order to avoid contact between a display screen side 100 and the keyboard panel 021, there is a space greater than height t between the keyboard panel 021 and the display screen side 100. t is the height of the key 1 protruding from the keyboard panel 021, and is a press stroke of the key 1.

It can be seen that limited by the press stroke of the key 1, the keyboard of the notebook computer is relatively thick, and only the press stroke of the key 1 can be reduced to reduce the thickness, which leads to a poor user experience of the keyboard.

### SUMMARY

Embodiments of this application provide a keyboard and an electronic device, so that keys of the keyboard can descend when the keyboard is not used, to reduce the height.

According to a first aspect, an embodiment of this application provides a keyboard, including a keyboard base and a key, and the key includes a keycap and a key holder, where the keyboard further includes a driving portion, and the driving portion includes a driving board, a first mating member, and a second mating member, where the first mating member and the second mating member are arranged on the driving board; the driving board moves in a first direction relative to the keyboard base through the second mating member; and the key includes a key mating member, and when moving in the first direction, the driving board drives the first mating member to move relative to the key mating member to drive the key to descend. The driving board drives the key to descend, so that the height of the keyboard can be designed to be smaller, and when the keyboard is applied to the electronic device, the thickness of the electronic device can be reduced. For a single keyboard product, the reduced height of the keyboard also facilitates stacking during processing and transportation, thereby saving space.

Based on the first aspect, this embodiment of this application further provides a first implementation of the first aspect:
There is an angle between the first direction and an ascending and descending direction of the key, the first mating member has a first surface, the key mating member has a second surface, and when the driving portion moves in the first direction, the first surface and the second surface press against each other to drive the key to descend. there is an angle between the first direction in which the driving portion moves and the ascending and descending direction, which is more conducive to driving the key to descend in a limited space by mechanical transmission than driving the key to descend directly in a descending direction, and helps maximize a descending range.

Based on the first implementation of the first aspect, this embodiment of this application further provides a second implementation of the first aspect:
The first mating member is a sliding member, the key mating member is a sliding groove, the sliding member has the first surface, and at least a part of a groove wall of the sliding groove is the second surface; or
the first mating member is a sliding groove, the key mating member is a sliding member, at least a part of a groove wall of the sliding groove is the first surface, and the sliding member has the second surface.

The sliding member and the sliding groove fit together in a simple way, which helps processing and brings a more stable pressing and descending process.

Based on the second implementation of the first aspect, this embodiment of this application further provides a third implementation of the first aspect:
The key holder includes a first arm and a second arm, one end of the first arm is hinged on the keyboard base, an other end is slidably supported on the keycap, one end of the second arm is hinged on the keycap, and an other end is slidably supported on the keyboard base; and the key mating member is arranged on the first arm, the second arm, or the keycap. The key holder is a skeleton of the key, which helps stabilize a key structure. The key mating member is arranged on the key holder or the keycap, which helps cooperation with the first mating member.

Based on the third implementation of the first aspect, this embodiment of this application further provides a fourth implementation of the first aspect:
The first direction is perpendicular to the ascending and descending direction of the key, the sliding groove is provided on the first arm or the second arm, and in a case that the key is in a first state, there is an angle between an extending direction of the sliding groove and the first direction. The sliding groove is provided on the key holder, which is easier to implement. The sliding groove is provided in a length direction of the arm, and is at an angle with the movement direction of the driving portion before the descending, which helps generate a force to drive the key to descend.

Based on the fourth implementation of the first aspect, this embodiment of this application further provides a fifth implementation of the first aspect:
In a case that the key is in a second state, the sliding groove is parallel to the first direction. With pressing of the driving portion, the sliding groove gradually turns parallel to the first direction in which the driving portion moves, and may be perpendicular to an elastic force direction of the elastic portion of the key. After an elastic force of the elastic portion acts on the key holder, a force that pushes the sliding member to move in an opposite direction cannot be generated through decomposition by the sliding groove, which can ensure that the key remains in the second state.

Based on any one of the third to fifth implementations of the first aspect, this embodiment of this application further provides a sixth implementation of the first aspect:
The first arm is a frame structure, an outer side wall of the second arm and an inner side wall of the first arm are cross-hinged, and the sliding groove is provided on an outer side wall of the first arm. The sliding groove is provided on the outer side wall of the arm, which facilitates cooperation with the driving portion.

Based on the sixth implementation of the first aspect, this embodiment of this application further provides a seventh implementation of the first aspect:
The sliding member is arranged on the driving portion, the sliding groove is provided on the first arm, the first arm rotates relative to the keyboard base around a first hinge axis, and in a case that the key is in the first state, a part of the sliding member that is inserted into the sliding groove is coaxial with the first hinge axis. The part of the sliding member that is inserted into the sliding groove is coaxial with the first hinge axis, which does not affect a normal press operation on the key. The sliding member is also inserted into the sliding groove when not driven. When the sliding member needs to be driven, the sliding member can move directly along the sliding groove without being guided to enter the sliding groove.

Based on the second implementation of the first aspect, this embodiment of this application further provides an eighth implementation of the first aspect:
the sliding member is a cylindrical structure or a multi-prism structure. The cylindrical structure can move along the sliding groove more smoothly and is not easily stuck, thereby ensuring that the descending by driving progresses smoothly; and the multi-prism structure can increase a contact area with the sliding groove, which facilitates force application.

Based on the first implementation of the first aspect, this embodiment of this application further provides a ninth implementation of the first aspect:
The first mating member is a sliding member, the key mating member is an inclined surface, the sliding member has the first surface, and the inclined surface is the second surface; or
The first mating member is an inclined surface, the key mating member is a sliding member, the inclined surface is the first surface, and the sliding member has the second surface.

Pushing the key by pressing the inclined surface is also easy.

Based on the first to sixth and the eighth to ninth implementations of the first aspect, this embodiment of this application further provides a tenth implementation of the first aspect:
In a case that the key is in the first state, the first mating member and the key mating member are not in contact with each other. There is no contact between the first mating member and the key mating member, so that the normal press operation on the key is free from interference.

Based on the tenth implementation of the first aspect, this embodiment of this application further provides an eleventh implementation of the first aspect:
At least one of the first mating member or the key mating member is arranged with a guiding structure, and when the first mating member moves, the guiding structure guides the first surface to contact and press against the second surface. The first mating member and the key mating member are not in contact with each other in a case that the key is in the first state, and by arranging the guiding structure, the first mating member and the key mating member cooperate more smoothly in a process of switching to the second state.

Based on the first aspect and the first to eleventh implementations of the first aspect, this embodiment of this application further provides a twelfth implementation of the first aspect:
The keyboard includes a plurality of keys, and the driving board includes the first mating member that cooperates with the second mating member of each key respectively. The driving portion drives all the keys to descend, which can improve the efficiency of driving the keys to descend.

Based on the twelfth implementation of the first aspect, this embodiment of this application further provides a thirteenth implementation of the first aspect:
Two sides of the keys are both arranged with the key mating member. The two sides of the keys are both arranged with the key mating member, so that the two sides of the keys can be simultaneously driven to descend by the driving portion and the keys descend in a relatively stable posture.

Based on the twelfth implementation of the first aspect, this embodiment of this application further provides a fourteenth implementation of the first aspect:
The driving board includes at least one first beam and a plurality of second beams, the first beam and the second beams are orthogonally arranged, the first mating member is arranged on the second beams, and at least one of the keys is arranged between two adjacent second beams. The first beam and the second beams facilitate the simultaneous descending of the plurality of keys.

Based on the thirteenth implementation of the first aspect, this embodiment of this application further provides a fifteenth implementation of the first aspect:
The driving board includes a plurality of first beams, two adjacent first beams and two adjacent second beams are enclosed to form a through hole, the driving board includes a plurality of through holes, the plurality of through holes and the plurality of keys are in one-to-one correspondence, and the keys pass through the through holes. The plurality of keys pass through the plurality of driving portions, which can exert a certain limiting effect on the driving portions, and drive the plurality of keys to descend simultaneously in a simple manner.

Based on the first aspect and the first to fifteenth implementations of the first aspect, this embodiment of this application further provides a sixteenth implementation of the first aspect:
The keyboard base is arranged with a base mating member, and between the base mating member and the second mating member, one is a rail, and the other is a rail groove, where the rail and the rail groove are connected by cooperation. The cooperation of the rail and the rail groove helps ensure that the driving board moves in the first direction.

Based on the first aspect and the first to sixteenth implementations of the first aspect, this embodiment of this application further provides a seventeenth implementation of the first aspect:
The key further includes an elastic portion arranged on the keyboard base. The elastic portion helps the keycap to rebound.

Based on the first aspect and the first to eighteenth implementations of the first aspect, this embodiment of this application further provides a nineteenth implementation of the first aspect:
The keyboard includes a keyboard panel, the keyboard panel and the keyboard base are enclosed to form a housing of the keyboard, the driving portion drives the key to the second state, and a height of the key is not higher than a height of the keyboard panel. This arrangement reduces the height of the keyboard.

According to a second aspect, an embodiment of this application further provides a keyboard, including a keyboard base and a key, the key including a keycap and a key holder. The keyboard further includes a driving portion, the driving portion includes a control member and a first mating member, the key is arranged with a second mating member, the first mating member is arranged on the keyboard base, and the control member controls at least one of the first mating member or the second mating member to generate a magnetic force to absorb each other and drive the key to descend. Magnetic adsorption guarantees an adsorption force, and structure arrangement is simple.

Based on the second aspect, this embodiment of this application further provides a first implementation of the second aspect:
The keyboard includes a plurality of keys, and the control member controls at least one of the first mating members or the second mating members to simultaneously generate magnetic forces or simultaneously lose the magnetic forces. In this way, all the keys can be simultaneously adsorbed to descend, thereby increasing the efficiency of descending by driving.

According to a third aspect, an embodiment of this application further provides an electronic device, including the keyboard according to any of the foregoing implementations. Because the key can be driven to descend by the driving portion, the thickness of the keyboard can be reduced in design, and the thickness of the electronic device can be reduced correspondingly.

Based on the third aspect, this embodiment of this application further provides a first implementation of the third aspect:
The electronic device is a notebook computer. The height of the keyboard of the notebook computer can be reduced, so that a thinner notebook computer can be designed to adapt to the requirement of thin design.

### BRIEF DESCRIPTION OF DRAWINGS

FIG. 1 is a schematic diagram of a notebook computer in an open state;
FIG. 2 is a schematic structural diagram of the notebook computer in FIG. 1 in a closed state;
FIG. 3 is an exploded view of a key cooperating with a driving portion and a bottom plate according to Embodiment 1 of this application;
FIG. 4 is a schematic diagram of a key holder of the key cooperating with the driving portion and the bottom plate in FIG. 3;
FIG. 5 is a schematic diagram of a driving portion and a keyboard base in sliding cooperation according to Embodiment 1 of this application;
FIG. 6 is a schematic diagram of a position relationship between the key in a first state and a sliding member of the driving portion in FIG. 3;
FIG. 7 is a schematic diagram of the sliding member in FIG. 6 after moving along a sliding groove;
FIG. 8 is a schematic structural diagram of a notebook computer according to Embodiment 1 of this application;
FIG. 9 is a schematic diagram of a display screen side of the notebook computer in FIG. 8 in a closed state;
FIG. 10 is a schematic diagram of a plurality of keys, driving portions, and bottom plates after being assembled according to Embodiment 2 of this application;
FIG. 11 is an exploded view of FIG. 10;
FIG. 12 is a schematic diagram of a driving portion in FIG. 11;
FIG. 13 is an enlarged view of part A in FIG. 12;
FIG. 14 is a schematic diagram of the driving portion in FIG. 11 moving from a first position to a second position;
FIG. 15 is a schematic diagram of a key and a driving portion cooperating with each other according to Embodiment 3 of this application, where the key is in a first state; and
FIG. 16 is a schematic diagram of the key in FIG. 15 descending to a second state.

### DESCRIPTION OF EMBODIMENTS

The embodiments of this application provide a keyboard and an electronic device. The electronic device is, for example, a notebook computer, and the keyboard is specifically a keyboard of the notebook computer, which may be understood in detail with reference to the following Embodiments 1 to 3.

### Embodiment 1

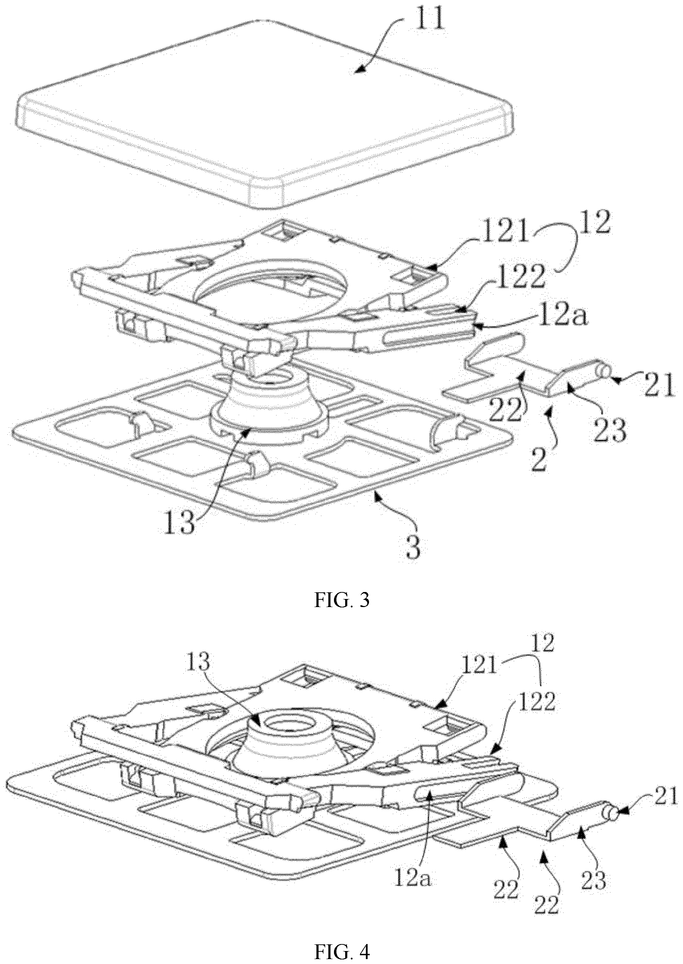

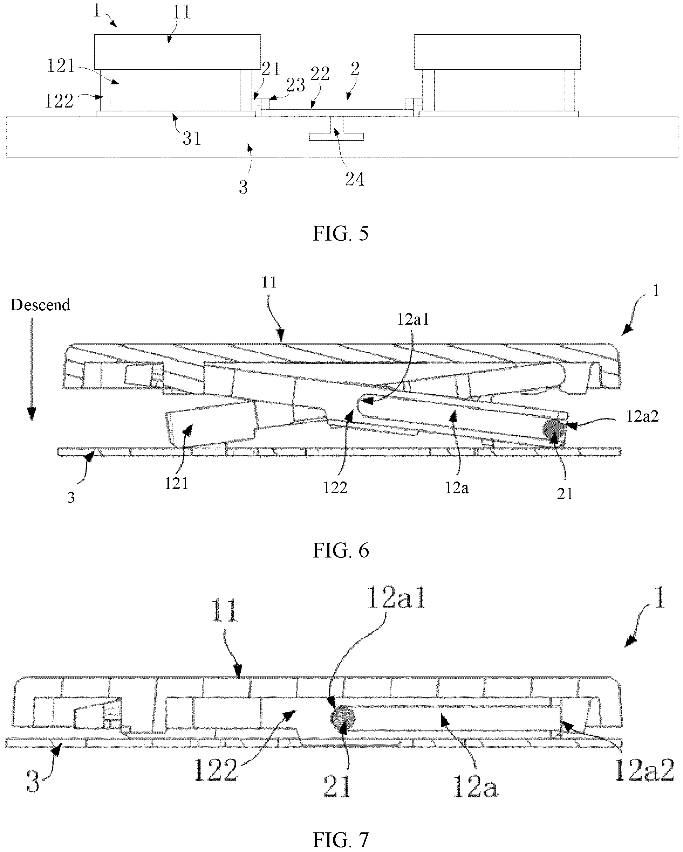

Referring to FIG. 3 and FIG. 4, FIG. 3 is an exploded view of a key 1 cooperating with a driving portion 2 and a bottom plate 3 according to Embodiment 1 of this application; FIG. 4 is a schematic diagram of a key holder 12 of the key 1 cooperating with the driving portion 2 and the bottom plate 3 in FIG. 3; and FIG. 5 is a schematic diagram of a driving portion and a keyboard base 30 in sliding cooperation according to Embodiment 1 of this application.

This embodiment of this application provides the keyboard of the electronic device, including the keyboard base 30. FIG. 3 only shows the bottom plate 3 of the keyboard base 30, and the bottom plate 3 may be separately fixed to the keyboard base 30, or integrated with the keyboard base 30. The keyboard further includes the key 1 and an elastic portion 13 arranged between the key 1 and the keyboard base 30. When the key 1 is pressed, the key 1 may trigger a circuit board (not shown in the figure) arranged on the keyboard base 30 to output a corresponding signal.

Specifically, as shown in FIG. 3, the key 1 includes a keycap 11 and a key holder 12, and the key holder 12 includes a first arm 122 and a second arm 121 that are cross-hinged. In this case, the key holder 12 is a scissor structure, the first arm 122 is specifically a frame structure and may be a door-shaped frame structure or an annular closed frame structure, and the second arm 121 is arranged in a frame of the first arm 122. One end of the first arm 122 of the key holder 12 in FIG. 3 is hinged to the bottom plate 3, the hinged end may be defined as a bottom end of the first arm 122, and the other end of the first arm 122 is a top end. The top end and the keycap 11 may be in rotating and sliding connection. A top end of the second arm 121 is hinged to the keycap 11, and a bottom end of the second arm 121 and the keyboard base 30 may be in rotating and sliding connection. The top ends of the two arms may support the keycap 11 of the key 1. When a cross angle of the two arms changes, the top end of the first arm 122 may rotate relative to the keycap 11 and slide, and the bottom end of the second arm 121 may rotate relative to the keyboard base 30 and slide. For a specific action process, pressing the key 11 is taken as an example. The bottom end of the first arm 122 may rotate relative to the keyboard base 30 and the top end of the second arm 121 may rotate relative to the keycap 11, to push a cross-hinged part of the two arms to descend and translate, thereby driving the top end of the first arm 122 to rotate relative to the keyboard base 11 and slide, and driving the bottom end of the second arm 121 to rotate relative to the keyboard base 30 and slide.

The elastic portion 13 is arranged between the key holder 12 and the bottom plate 3 of the keyboard base 30. That is, the elastic portion 13 may support the key holder 12. Certainly, the elastic portion 13 may also directly support the keycap 11. The key holder 13 supports the keycap 11 and maintains the structural stability of the key 1, so that only a press operation can be performed on the key 1.

In order to clearly describe a position of the key, a first state and a second state of the key are defined. In the first state, the key is not pressed, and is not under any force other than gravity. In the second state, the key is fully pressed to descend to the lowest position. It may be understood that the key generally has a key travel that is an extreme (or maximum) distance by which the key moves when pressed. In other words, in the first state, the key is at the start point of the key travel. In the second state, the key is at the end point of the key travel.

In use, an operator may press the keycap 11 to cause the keycap 11 to descend and approach the bottom plate 3 of the keyboard base 30. The keycap 11 correspondingly presses the top ends of the first arm 122 and the second arm 121, so that the first arm 122 and the second arm 121 rotate around their respective hinge axis and descend, the cross angle becomes larger, and the median of the cross angle is parallel to an ascending and descending direction of the key 1. The elastic portion 13 is also compressed correspondingly during the descending. When an external force pressing the keycap 11 is removed, the key holder 12 and the keycap 11 eject and ascend relative to the bottom plate 3 of the keyboard base 30 under a resetting elastic force of the elastic portion 13, and return to the first state.

It should be noted that, "descending" of the key 1 described in this embodiment of this application means that the key 1 moves in a direction close to the keyboard base 30, "ascending" means that the key 1 moves in a direction away from the keyboard base 30; and correspondingly, "down" is also a direction towards the keyboard base 30, and "up" is a direction away from the keyboard base 30. In addition, the height also takes the keyboard base 30 as a reference system, and a direction protruding from the keyboard base 30 is a height direction.

In this embodiment of this application, the keyboard further includes the driving portion 2 that can drive the key 1 to descend to approach the keyboard base 30 and compress the elastic portion 13. As shown in FIG. 3 and FIG. 4, the driving portion 2 includes a driving board 22 and a first mating member, and the first mating member is specifically a sliding member 21 arranged on the driving board 22. The sliding member 21 is a columnar structure protruding from one side of the driving portion 2, or may be a cylindrical structure or a multi-prism structure. In FIG. 3, the sliding member 21 is arranged symmetrically on two sides of the driving board 22, and only the sliding member 21 on one side is shown under a viewing angle of FIG. 3. The key holder 12 of the key 1 includes a key mating member that is specifically a sliding groove 12a, and the sliding groove 12a may be provided on an outer side wall of the first arm 122. In FIG. 3, an outer side wall of the second arm 121 and an inner side wall of the first arm 122 are cross-hinged, and a side wall of the first arm 122 away from the second arm 121 is the outer side wall of the first arm 122. The sliding member 21 of the driving portion 2 may be at least partially inserted into the sliding groove 12a and slides along the sliding groove 12a. When the sliding member 21 is a cylindrical structure, the sliding member 21 can move along the sliding groove 12a more smoothly and is not easily stuck. When the sliding member 21 is a multi-prism structure, a contact area with the sliding groove 12a can be increased, thereby facilitating force application.

In this embodiment, the driving portion further includes a second mating member, and the driving board 22 moves in a first direction relative to the keyboard base 30 through the second mating member. In this embodiment of this application, the first direction is a direction parallel to the keyboard base 30, that is, parallel to an upper surface of the keyboard base 30, and the upper surface of the keyboard base 30 is a side surface facing the key 1. When the keyboard of the electronic device is placed horizontally, the upper surface of the keyboard base 30 is usually in a horizontal direction, and the first direction is also the horizontal direction. The key 1 is generally perpendicular to the upper surface of the keyboard base 30, that is, the key 1 ascends and descends in a vertical direction, and the first direction is perpendicular to the ascending and descending direction of the key 1. Certainly, based on an ergonomic design, there may be an angle between the upper surface of the keyboard base 30 and the horizontal direction, and there is an angle between the first direction and the horizontal direction. In this case, the first direction is still perpendicular to the ascending and descending direction of the key 1. However, it should be understood that the first direction is not necessarily parallel to the upper surface of the keyboard base 30, instead there may be an angle between the first direction and the upper surface of the keyboard base 30, or the first direction is parallel to the upper surface of the keyboard base 30, but there is an angle between the ascending and descending direction of the key 1 and the upper surface of the keyboard base 30. In this case, the angle between the first direction and the ascending and descending direction of the key 1 is less than 90 degrees and greater than 0 degrees.

Referring to FIG. 5, the second mating member arranged on the driving board 22 in this embodiment of this application is a T-shaped sliding rail 24. The keyboard base 30 is arranged with a keyboard mating member, and the keyboard mating member is a T-shaped sliding groove that cooperates with the T-shaped sliding rail 24. The T-shaped sliding groove and the T-shaped sliding block both extend in the first direction, to limit the movement of the driving board 22 in the first direction relative to the keyboard base 303. Obviously, alternatively, the T-shaped sliding groove may be provided on the driving board 22 and the T-shaped sliding rail 24 may be arranged on the keyboard base 30.

As shown in FIG. 6 and FIG. 7, FIG. 6 is a schematic diagram of a position relationship between the key 1 in the first state and the sliding member 21 of the driving portion 2 in FIG. 3. FIG. 7 is a schematic diagram of the sliding member 21 in FIG. 6 after moving along the sliding groove 12a, where the key 1 is in the second state.

As shown in FIG. 6, when the key 1 is not pressed by an external force, the key 1 is in the first state, and there is an angle between the sliding groove 12a and a plane of the bottom plate 3, that is, the sliding groove 12a is provided inclined relative to the bottom plate 3. An extending direction of the sliding groove 12a is consistent with an extending direction of the first arm 122. The sliding groove 12a has a first end 12a2 and a second end 12a1, and in the first state, the first end 12a2 of the sliding groove 12a is closer to the bottom plate 3 than the second end 12a1. As can be seen from FIG. 6, the first end 12a2 is lower than the second end 12a1, and in this case, the sliding member 21 of the driving portion 2 is inserted into the first end 12a2 of the sliding groove 12a. In addition, in this embodiment of this application, a position of the first end 12a2 is also a position where the first arm 122 and the bottom plate 3 are hinged.

As shown in FIG. 7, when a user does not need to use the keyboard of the electronic device, the driving board 22 may be moved in the first direction to drive the sliding member 21 to slide along the sliding groove 12a. In this embodiment of this application, as shown in FIG. 6, the driving portion 2 may slide along the upper surface of the keyboard base 30, and the driving portion 2 and the sliding member 21 thereof may be arranged in a lower position. Because the sliding member 21 moves linearly in the first direction with the driving board 22, a height of a movement path of the sliding member 21 remains unchanged relative to the keyboard base 30, that is, the height remains at a height of the first end 12a2 of the sliding groove 12a when the sliding member 21 slides. In the state of FIG. 6, a height of the sliding groove 12a gradually increases from the first end 12a2 to the second end 12a1, and the sliding member 21 needs to keep moving at the same height and inevitably presses a lower groove wall of the sliding groove 12a (that is, a groove wall close to the bottom plate 3). In this way, the first arm 122 is under a downward component force that is a component force pointing to the bottom plate 3, thereby forcing the first arm 122 to rotate counterclockwise around the hinge axis thereof and descend under a viewing angle of FIG. 6. Therefore, the entire key holder 12 is driven to descend and compress the elastic portion 13, and the key 1 descends and approaches the keyboard base 30, that is, the keycap 11 of the key 1 descends relative to the keyboard base 30.

When the sliding member 21 moves to the second end 12a1 of the sliding groove 12a, the second end 12a1 is a closed end, and the sliding member 21 cannot continue to slide. The key 1 descends into place to be in the lowest position, that is, the key 1 is in the second state. A lock key of the keyboard may be set. When the lock key is pressed, no signal is inputted when other keys 1 are pressed, and when a press stroke of the driving portion 2 is set, there is no need to consider whether the keys 1 may be pressed, and the lock key may be pressed simultaneously and correspondingly to lock the keyboard during a pressing process. In another example, when the driving portion 2 drives the key 1 to descend, an action of the driving portion 2 may be set as a locking signal of a linkage output keyboard. A locking signal input end may be set, and when the driving portion 2 moves into place, the locking signal input end is triggered and transmits the locking signal to a controller of the electronic device. In this way, even if the key 1 descends and contacts the circuit board, no signal is inputted, and the keyboard is in a locked state. Certainly, a height by which the keycap 11 descends may be controlled by controlling a stroke of the sliding member 21. For example, the lowest position to which the key 1 descends does not reach a position of the second state, and the key 1 fails to trigger the circuit board of the keyboard and input a signal, that is, a height by which the key 1 is driven by the driving portion 2 to descend may be slightly less than a key travel of the key 1.

When the key 1 needs to be reused, the driving portion 2 may move in an opposite direction to the first direction, and the elastic force of the elastic portion 13 is gradually released and may drive the key 1 to gradually eject until the key 1 returns to the first state. The user can then perform a normal press operation on the key 1 again.

In addition, as shown in FIG. 6, the first arm 122 is hinged to the bottom plate 3. The first arm 122 may be defined to rotate around a first hinge axis. When the key 1 is in the first state, the driving portion 2 does not drive the key 1 to descend. A part of the sliding member 21 inserted into the first end 12a2 of the sliding groove 12a is coaxial with the first hinge axis, that is, the first end 12a2 of the sliding groove 12a is also a hinged end of the first arm 122. Therefore, when the key 1 needs to be used, the rotation of the first arm 122 is free from interference of the sliding member 21, and the first arm 122 may freely rotate around the sliding member 21, thereby ensuring normal use of the key 1.

It may be understood that, when the key 1 is in the first state, the sliding member 21 is not limited to being inserted into the sliding groove 12a and being coaxial with the first hinge axis, and the first end 12a2 of the sliding groove 12a is not limited to being in a hinged position. For example, the sliding member 21 of the driving portion 2 may also be removed from the sliding groove 12a along the movement path of the sliding member 21. When the key 1 needs to be driven to descend, the sliding member 21 gradually slides into the sliding groove 12a and then drives the key 1 to descend. In another example, the sliding member 21 may be a telescopic structure. When the key 1 needs to be driven to descend, the sliding member 21 is extended to be inserted into the sliding groove 12a. When a normal press operation needs to be performed on the key 1, the sliding member 21 is retracted to be removed from the sliding groove 12a. These methods can ensure that the sliding member 21 does not interfere with the normal press operation on the key 1.

In the foregoing embodiment, the first end 12a2 of the sliding groove 12a is in the hinged position of the first arm 122. When the key holder 12 is in the first state, the first end 12a2 is in the lowest position of the first arm 122. The sliding member 21 moves in a direction perpendicular to the ascending and descending direction of the key 1. When the sliding member 21 moves on a surface of the keyboard base 30, that is, the sliding member 21 moves within a plane at the height of the first end 12a2, and when the sliding member 21 moves to the second end 12a1 of the sliding groove 12a, both the first arm 122 and the second arm 121 rotate and descend. The first arm 122 and the second arm 121 are flush or nearly flush with each other, and the two arms and the sliding groove 12a are all approximately flush with a surface of the bottom plate 3. The key 1 descends to the lowest position, as shown in FIG. 7.

In addition, the driving portion 2 moves in the first direction, and the first direction is perpendicular to the ascending and descending direction of the key 1. Because an elastic force direction of the elastic portion 13 is consistent with the ascending and descending direction of the key 1, a movement direction of the driving portion 2 is perpendicular to the elastic force direction of the elastic portion 13. After the key 1 descends to the second state shown in FIG. 7, the sliding groove 12a is parallel to the first direction of the driving portion 2. After the elastic force of the elastic portion 13 acts on the key holder 12, a force that drives the sliding member 21 to move in the opposite direction cannot be generated through decomposition by the sliding groove 12a, which can further ensure that the key 1 remains in a descending position and is locked in the second state. It should be understood that, after the key 1 descends to the second state, the sliding groove 12a and the first direction in which the driving portion 2 moves do not need to be completely parallel theoretically, but are approximately parallel to achieve this effect. Certainly, in order to better lock the position of the key 1, a corresponding locking device may also be arranged. After the driving portion 2 moves to drive the key 1 to descend to the second state, the driving portion 2 or the key 1 may be locked by the locking device.

It can be seen that in this embodiment of this application, the arrangement manner of the sliding groove 12a and the movement path of the sliding member 21 maximize a descending range of the key 1, so that the key holder 12 can descend to the greatest extent to a flush state without interfering with the normal press operation on the key 1, which helps ensure that the key 1 remains in the descending position.

Obviously, however, the sliding groove 12a is not limited to being arranged in this manner, as long as the sliding member 21 can drive the key holder 12 to descend when sliding along the sliding groove 12a. For example, when the sliding member 21 slides to the second end 12a1 of the sliding groove 12a, the first arm 122 and the second arm 121 may still at an angle with the bottom plate 3. The first end 12a2 of the sliding groove 12a is also not limited to being arranged in the hinged position.

In addition, in this embodiment, the sliding groove 12a is provided on the key holder 12. It can be learnt that the sliding groove 12a may also be provided on the keycap 11, which is also a feasible solution. For example, the sliding groove 12a may be provided on an inner side wall of the keycap 11.

Certainly, the sliding groove 12a may also be provided on the driving portion 2. The sliding member 21 is arranged on the keycap 11 or the key holder 12, and the sliding groove 12a is arranged to be inclined. When the key 1 is in the first state, the sliding member 21 is inserted into a higher position of the sliding groove 12a. As the sliding member 21 moves gradually, a groove wall of the sliding groove 12a abuts against the sliding member 21, to force the sliding member 21 to descend and drive the entire key 1 to descend. However, it can be learnt that the sliding groove 12a is provided on the key 1, and the driving portion 2 may be arranged in a position as low as possible, which helps the key 1 to descend to the greatest extent.

As shown in FIG. 3, the sliding groove 12a in this embodiment is provided on the outer side wall of the first arm 122. It can be learnt that, the sliding groove 12a may also be provided on the inner side wall of the first arm 122, or on an inner side wall or the outer side wall of the second arm 121. The sliding groove 12a is provided on the outer side wall of the first arm 122 and is less susceptible to interference of the key holder 12 when driving. The design of the driving portion 2 is simpler. It can be thought that the sliding groove may also be provided on a top wall of the first arm 122 or the second arm 121, and the top wall is a wall facing the keycap 11. In this case, the sliding member 21 may abut against a bottom wall of the sliding groove. The key mating member may also be arranged on a bottom wall of the arm. In this case, the key mating member may be a blind hole structure, and the sliding member 21 abuts against a bottom hole wall of the blind hole structure when moving, to force the arm to descend.

For further understanding, in this embodiment, the key mating member arranged on the key 1 being the sliding groove 12a is taken as an example. It can be learnt that, the key mating member is not limited to the structure of the sliding groove 12a and may be an inclined surface arranged directly. The inclined surface may be arranged on a side wall or a top wall of the arm, and the first mating member may be a pushing block arranged on the driving portion 2. When moving, the pushing block abuts against the inclined surface to generate a component force pressing downward to drive the key 1 to descend. That is, the driving is achieved by a wedge principle. It can be seen that, the key mating member is not limited as long as the first mating member can abut against the key mating member to drive the key 1 to descend when the driving portion 2 moves. The first mating member and the key mating member may be specifically arranged in various manners, which are not listed herein again.

It should be known that when the driving portion 2 moves along the upper surface of the keyboard base 30, the driving portion 2 may be in a lower position. The movement along the upper surface of the keyboard base 30 may be converted into movement of the key 1 through driving in the height direction. Compared with driving the key 1 to descend through the movement of the driving portion 2 directly in the height direction, this embodiment of this application is more beneficial to driving the key 1 to descend in a limited space through mechanical transmission, and more easily maximizes the descending range.

It should be noted that, that the driving portion 2 and the sliding member 21 thereof move along the upper surface of the keyboard base 30 is mentioned in this embodiment of this application. As described above, the upper surface of the keyboard base 30 is generally perpendicular to the ascending and descending direction of the key 1. When the driving portion 2 moves in the first direction, the driving portion 2 may be arranged at a lower height, to ensure that the descending range of the key 1 is maximized. However, as described above, the first direction in which the driving portion 2 moves is not necessarily parallel to the upper surface of the keyboard base 30, instead is approximately parallel to the upper surface of the keyboard base 30, or there is an angle between the first direction and the upper surface of the keyboard base 30, or the driving portion 2 moves along the upper surface of the keyboard base 30. It is also feasible that there is an angle between the upper surface of the keyboard base 30 and the ascending and descending direction of the key 1. In theory, as long as there is an angle between the upper surface of the keyboard base 30 and the ascending and descending direction of the key 1, on the aspect of the descending range, this solution is better than a solution that the key 1 is driven to descend directly in the ascending and descending direction.

Still referring to FIG. 4, the keyboard may include a plurality of keys 1. In this embodiment, the driving portion 2 includes the driving board 22, and a side plate 23 is arranged on two sides of the driving board 22. The side plates 23 on the two sides are both arranged with a sliding member 21. The driving board 22 may be located between two adjacent keys 1. The two sliding members 21 may move along sliding grooves 12a of two adjacent keys 1 respectively to simultaneously drive the two keys 1 to descend. It can be learnt that in this case, two sides of each key 1 may be respectively provided with a sliding groove 12a, that is, outer side walls on two sides of the first arm 122 are provided with the sliding groove 12a respectively. Two sides of one key 1 may be respectively driven to descend by the sliding members 21 of two driving boards, so that the descending is reliable with an even force. In addition, the sliding members 21 on two sides of a driving board are inserted into the sliding grooves 12a of two keys 1 respectively, which is equivalent to limiting the driving board between the two keys 1. The driving board can only move in the first direction in a space between the two keys 1, which also has a guiding and limiting effect.

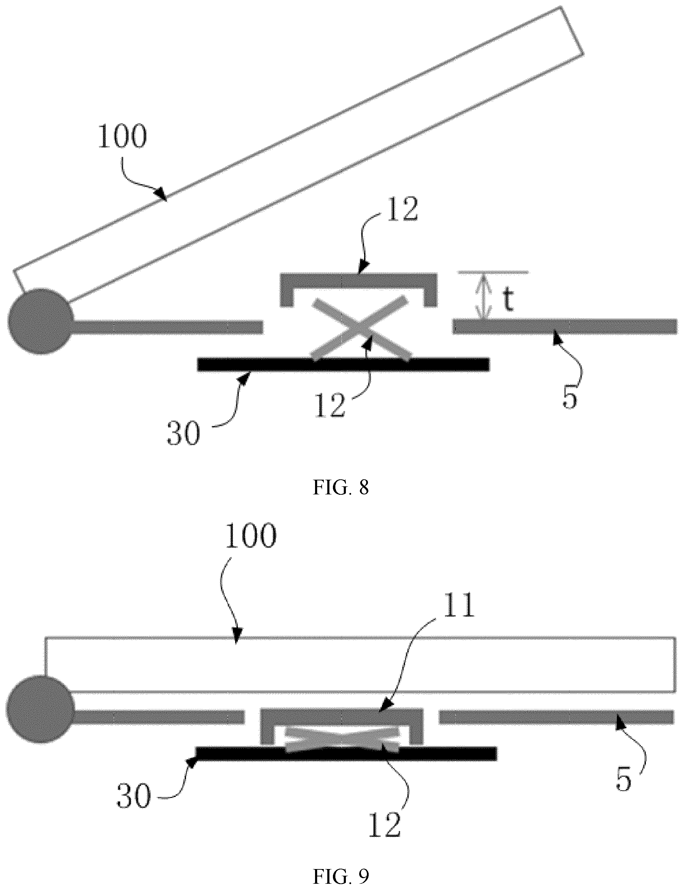

Still referring to FIG. 8 and FIG. 9, FIG. 8 is a schematic structural diagram of a notebook computer according to Embodiment 1 of this application, and a display screen side 100 of the notebook computer is in an open state; and FIG. 9 is a schematic diagram of the display screen side 100 of the notebook computer in FIG. 8 in a closed state. FIG. 8 and FIG. 9 intuitively show the technical effects of this embodiment.

As shown in FIG. 8, the keyboard includes a keyboard panel, and the keyboard panel 4 and the keyboard base 30 are enclosed to form a housing of the keyboard. When the key 1 does not need to be used, the driving board may be moved in the first direction to drive the key 1 to descend. In this way, a height of the key 1 protruding from the bottom plate 3 of the keyboard base 30 can be reduced. By comparing FIG. 8 with FIG. 9 for understanding, height t can be reduced. In this case, there is no need to reserve a height space that can accommodate the key 1 in the first state between the housing of the keyboard and the display screen body 100. As shown in FIG. 8, the keyboard panel 4 may be approximately flush with the keycap 11 of the key 1 after the descending, that is, a height of the key 1 is not higher than a height of the keyboard panel 4. In this case, the display screen body 100 is not in contact with the key 1, or even if the display screen body 100 is in contact with the key 1, the key 1 does not exert a force on the display screen body 100. It can be seen that in this embodiment, a height of the housing of the keyboard needs only to be approximately the same as the height of the key 1 after the key 1 descends into place, and a height of the keyboard can be reduced. Correspondingly, the thickness of the notebook computer can be further reduced to meet the requirement of thin design of the notebook computer, and a press stroke of the key 1 does not need to be reduced, thereby maintaining a good user experience.

In this embodiment, the movement of the driving portion 2 in the first direction may be controlled electrically. For example, a switch may be arranged, and a motor may drive the driving board to move by pressing the switch, or when the display screen 100 of the notebook computer is to be closed, a control instruction is automatically sent to start the motor to drive the driving portion 2 to move. Alternatively, the movement of the driving portion 2 may be set in conjunction with the display screen 100 through a transmission component. That is, when the display screen 100 rotates to be closed with the keyboard, the transmission component automatically drives the driving portion 2 to move, and the transmission component may, for example, convert the rotation of the display screen 100 into a linear movement, thereby pulling or pushing the driving portion 2. Alternatively, the movement of the driving portion 2 may also be manually controlled, and an operator may directly push or pull the driving portion 2 to move. This operation is also simple.

Actually, this arrangement manner helps reduce the thickness of the notebook computer, and for a single keyboard product, the height of the key 1 of the keyboard is reduced by the driving of the driving portion 2. Moreover, this arrangement manner also facilitates stacking during processing and transportation, thereby saving space.

### Embodiment 2

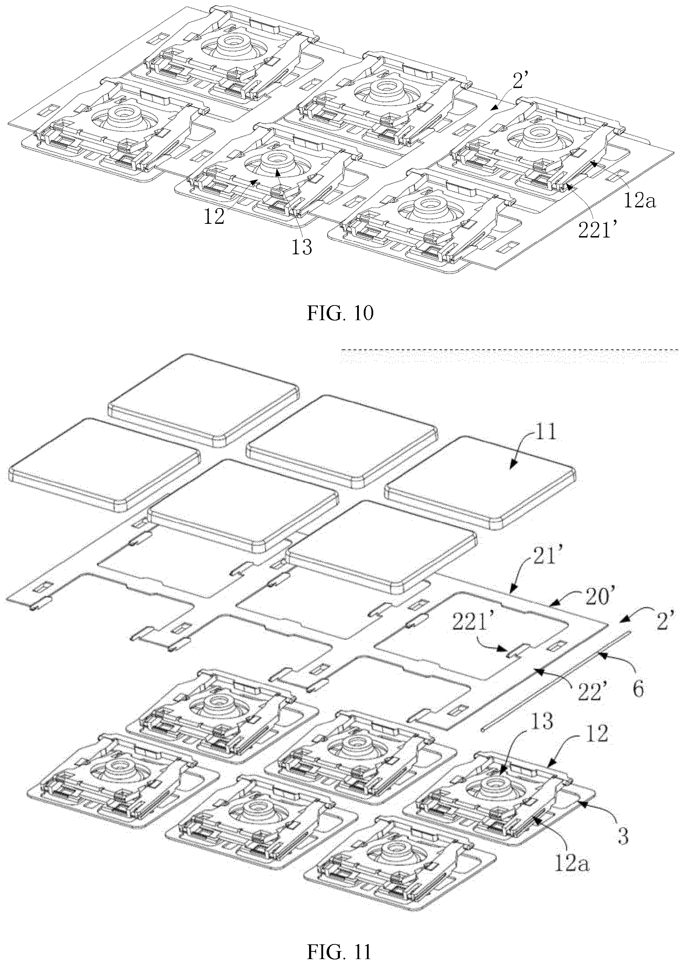

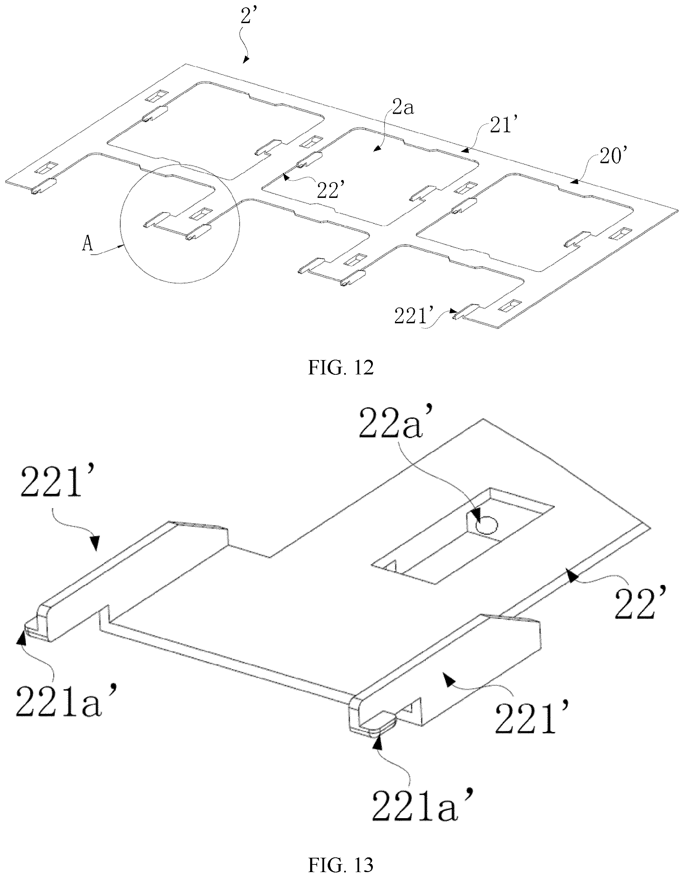

Referring to FIG. 10 and FIG. 11, FIG. 10 is a schematic diagram of a plurality of keys 1, driving portions 2, and bottom plates 3 after being assembled according to Embodiment 2 of this application; FIG. 11 is an exploded view of FIG. 10; FIG. 12 is a schematic diagram of a driving portion 2 in FIG. 11; and FIG. 13 is an enlarged view of part A in FIG. 12.

In Embodiment 2, the keyboard includes the plurality of keys 1, and the structure of the keys 1 may be understood with reference to Embodiment 1, which is not repeated again. The bottom plates 3 corresponding to the plurality of keys 1 may be fixed to a keyboard base respectively, or may be connected to each other and fixed to the keyboard base, or the bottom plates 3 may also be a part of the keyboard base.

In this embodiment, a driving portion 2' includes a driving board 20' that has a plurality of through holes 2a'. The keys 1 can pass through the through holes 2a', and the through holes 2a' and the keys 1 need to be spaced apart from each other in a first direction, to avoid interfering with movement of the driving board 20'. As the driving board 20' moves, the driving board 20' can synchronously drive all the keys 1 to descend and approach the keyboard base.

As shown in FIG. 13, the driving board 20' is provided with the plurality of through holes 2a', to form a crisscross orifice plate structure, including a plurality of first beams 21' extending in a horizontal direction and a plurality of second beams 22' extending in a longitudinal direction. The first beams 21' and the second beams 22' are orthogonally arranged, and a through hole 2a' is provided between two adjacent horizontal plates 21' and two adjacent longitudinal plates 22'. The longitudinal direction is the first direction in which the driving portion 2' moves along a plane of the keyboard base. A first arm 122 and a second arm 121 also intersect longitudinally and are in an X shape in a longitudinal plane.

In addition, each second beam 22' is arranged with sliding members 221a', and the number of the sliding members 22' needs to ensure that the sliding grooves 12 of each key 1 have a corresponding sliding member 22'. As shown in FIG. 13, two longitudinal sides of the second beam 22' are both arranged with a sliding member 221a'. Specifically, edges of the second beam 22' extend in a direction away from the bottom plate 3 to form side plates 221', and the side plates 221' then extend toward the sliding grooves 12a of adjacent keys 1 to form the sliding members 221a'. The second beam 22' may move on a surface of the keyboard base, and a height of the sliding members 221a' may be slightly higher than that of the keyboard base. In this case, the sliding members 221a' on the two sides of the second beam 22' in FIG. 13 may correspond to the sliding grooves 12a of two keys 1 adjacent to the second beam 22'. When the second beam 22' is on an edge of the driving board 2', the second beam 22' is adjacent to only one key 1, and the second plate 22' only needs to be arranged with one sliding member 221a'.

In addition, as shown in FIG. 13, a bottom of the second beam 22' is provided with a perforation 22a' extending in the first direction, and the perforation 22a' serves as a second mating member of the driving portion 2'. Still referring to FIG. 11, a keyboard mating member arranged in the keyboard base is a sliding rod 6, and the sliding rod 6 runs through the perforation 22a' and is fixed to the keyboard base. When the driving board 20' moves, the driving board 20' may slide along the sliding rod 6, to limit the driving board 20' to move in the first direction relative to the keyboard base, which is the same as a principle of arranging the T-shaped sliding rail and the T-shaped sliding groove in Embodiment 1, both for limiting the movement of the driving board 20'. It can be understood that, the T-shaped sliding rail 24 and the T-shaped sliding groove, as well as the sliding rod 6 and the perforation 22a', are a specific structural form of a rail and a rail groove. As long as the movement of the driving board 20' relative to the keyboard base in the first direction can be limited, structures of the second mating member and the keyboard mating member are not limited.

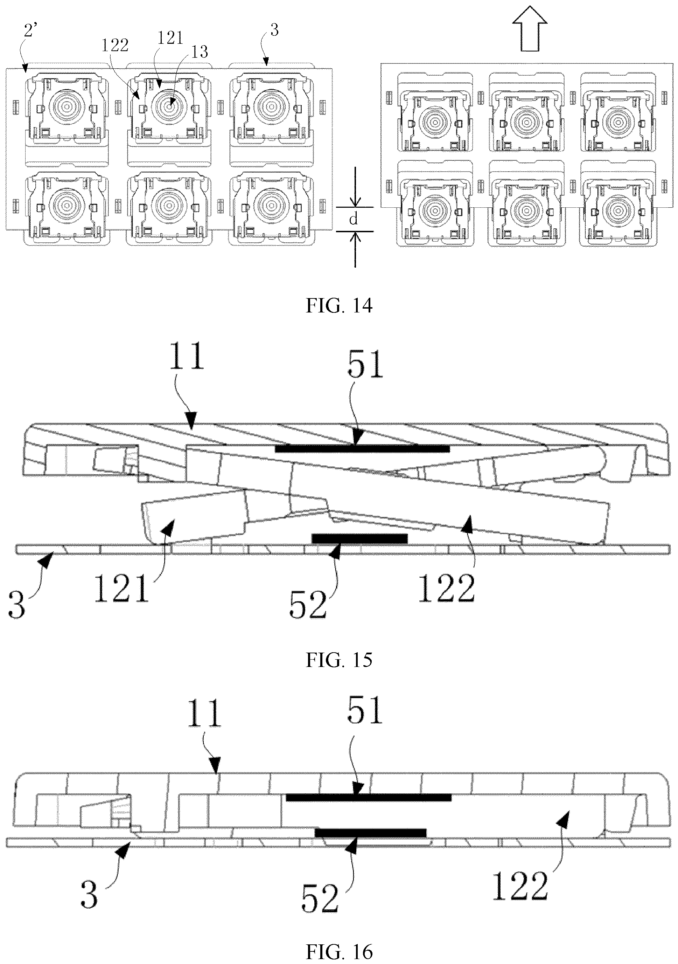

FIG. 14 is a schematic diagram of the driving portion in FIG. 11 moving from a first position to a second position, and correspondingly, the keys 1 descend from a first state to a second state.

In FIG. 14, the keys 1 in the keyboard shown in the drawing on the left are in the first state, and the driving portion 2' is in the first position. When the keys 1 need to descend, the driving portion 2' is pushed to move distance d to the second position, that is, the driving portion 2' moves to a position in the drawing on the right in FIG. 14, the sliding members 221a' of the driving portion 2' slide from a first end 12a2 of the sliding grooves 12a to a second end 12a1, and the keys 1 descend to the second state. In this embodiment, when the driving portion 2' moves, the driving portion 2' may drive all the keys 1 to descend synchronously, which is applicable to a keyboard having a plurality of keys 1, thereby improving the efficiency of driving the keys 1 to descend and ensuring synchronization. Furthermore, in this embodiment, the plurality of keys 1 pass through the through holes 2a' of the driving portion 2', and a plurality of sliding members 221a' of the driving portion 2' are inserted into the sliding grooves 12a. In this way, a height position of the driving portion 2' is limited, the driving portion 2' may move stably at this height, and there is no need to arrange a limiting or guiding structure.

In this embodiment, the driving board 20' includes a plurality of first beams 21' and second beams 22', where the second beams 22' are used for arranging the sliding members 221a', and the first beams 21' are used for connecting the plurality of second beams 22' into an integrated structure. Therefore, there may not be a plurality of first beams 21', and one first beam 21' is acceptable. For example, one first beam 21' is connected with middle parts of the plurality of second beams 22', and the driving board 20' formed in this case is in a shape of a fishbone. In another example, one first beam 21' is connected with ends of the plurality of second beams 22', and the driving board 20' formed in this case is in a shape of a comb. In this case, at least one key 1 is provided between two adjacent second beams 22', and the key 1 ascends and descends in a gap between the two second beams 22'. The first beams 21' and the second beams 22' described above may be separately connected or integrally arranged.

In addition, with regard to Embodiment 1, two sides of the driving portion 2 in FIG. 3 are both arranged with a sliding member 21 that in fact may also drive two keys 1 to descend simultaneously. In a case that the keyboard has a small number of keys 1, the driving portion 2 may also drive one key 1 or two keys 1 to descend. For a notebook computer, the keyboard generally has a large number of keys 1, and arranging a plurality of sliding members 221a' for one driving portion 2' can facilitate efficient operating.

### Embodiment 3

Referring to FIG. 15 and FIG. 16, FIG. 15 is a schematic diagram of a key 1 and a driving portion cooperating with each other according to Embodiment 3 of this application, where the key 1 is in a first state; and FIG. 16 is a schematic diagram of the key 1 in FIG. 15 descending to a second state.

In this embodiment, a structure of the key 1 is basically the same as the structure of the key 1 in Embodiment 1 and Embodiment 2, except that no sliding groove 12a is provided. The driving portion is different from that in Embodiment 1 and Embodiment 2. The driving portion in this embodiment includes a control member (not shown in the figure) and a first mating member 51. A keyboard base is arranged with a key mating member 52. The first mating member 51 is connected to the key 1, and may be connected to either a key holder 12 or a keycap 11 of the key 1. The key mating member 52 is fixed relative to the keyboard base, and may be arranged on the keyboard base, for example, on a bottom plate 3 of the keyboard base. The control member can control at least one of the first mating member 51 or the key mating member 52 to generate a magnetic force. For example, the key mating member 52 may be an iron core wound with a coil. The control member may control the coil to be energized to magnetize the iron core. The first mating member 51 may be a ferromagnetic structure, and may be a permanent magnet, an iron block, or the like. In this way, after the key mating member 52 is magnetized, the key mating member 52 and the first mating member 51 can absorb each other and drive the key 1 to descend and approach the keyboard base. When the key 1 does not need to be locked, the coil may be de-energized, and the first mating member 51 returns to the first state under a resetting elastic force of the elastic portion 13.

In this embodiment, the control member can simultaneously control the first mating members 51 or the key mating members 52 to generate or eliminate magnetic forces to achieve synchronous descending or synchronous ascending. Still taking the key mating member 52 that is an iron core wound with a coil as an example, coils of the key mating members 52 corresponding to all keys 1 may be connected in series in one line. By controlling turn-on and turn-off of the line, the control member can control all key mating members 52 to be simultaneously de-energized to lose magnetic forces, or to be simultaneously energized to be magnetized.

The embodiments of this application further provide an electronic device, including the keyboard described in the foregoing embodiments. The electronic device may be the notebook computer described above, and has the same technical effects as the foregoing embodiments, which are not described again.

The principle and implementations of this application are described herein through specific examples. The descriptions of the foregoing embodiments are merely used for helping understand the method and core ideas of this application. It should be noted that a person of ordinary skill in the art may further make several improvements and modifications to this application without departing from the principle of this application. These improvements and modifications also fall within the protection scope of the claims of this application.

## Claims

1. A keyboard, comprising a keyboard base and a key, the key comprising a keycap and a key holder, wherein the keyboard further comprises a driving portion, and the driving portion comprises a driving board, a first mating member, and a second mating member, wherein the first mating member and the second mating member are arranged on the driving board; the driving board moves in a first direction relative to the keyboard base through the second mating member; and the key comprises a key mating member, and when moving in the first direction, the driving board drives the first mating member to move relative to the key mating member to drive the key to descend.

2. The keyboard according to claim 1, wherein there is an angle between the first direction and an ascending and descending direction of the key, the first mating member has a first surface, the key mating member has a second surface, and when the driving portion moves in the first direction, the first surface and the second surface press against each other to drive the key to descend.

3. The keyboard according to claim 2, wherein the first mating member is a sliding member, the key mating member is a sliding groove, the sliding member has the first surface, and at least a part of a groove wall of the sliding groove is the second surface; or
the first mating member is a sliding groove, the key mating member is a sliding member, at least a part of a groove wall of the sliding groove is the first surface, and the sliding member has the second surface.

4. The keyboard according to claim 3, wherein the key holder comprises a first arm and a second arm, one end of the first arm is hinged on the keyboard base, an other end is slidably supported on the keycap, one end of the second arm is hinged on the keycap, and an other end is slidably supported on the keyboard base; and the key mating member is arranged on the first arm, the second arm, or the keycap.

5. The keyboard according to claim 4, wherein the first direction is perpendicular to the ascending and descending direction of the key, the sliding groove is provided on the first arm or the second arm, and in a case that the key is in a first state, there is an angle between an extending direction of the sliding groove and the first direction.

6. The keyboard according to claim 5, wherein in a case that the key is in a second state, the sliding groove is parallel to the first direction.

7. The keyboard according to any one of claims 4 to 6, wherein the first arm is a frame structure, an outer side wall of the second arm and an inner side wall of the first arm are cross-hinged, and the sliding groove is provided on an outer side wall of the first arm.

8. The keyboard according to claim 7, wherein the sliding member is arranged on the driving portion, the sliding groove is provided on the first arm, the first arm rotates relative to the keyboard base around a first hinge axis, and in a case that the key is in the first state, a part of the sliding member that is inserted into the sliding groove is coaxial with the first hinge axis.

9. The keyboard according to claim 3, wherein the sliding member is a cylindrical structure or a multi-prism structure.

10. The keyboard according to claim 2, wherein the first mating member is a sliding member, the key mating member is an inclined surface, the sliding member has the first surface, and the inclined surface is the second surface; or
the first mating member is an inclined surface, the key mating member is a sliding member, the inclined surface is the first surface, and the sliding member has the second surface.

11. The keyboard according to any one of claims 2 to 7, and 9 to 10, wherein in a case that the key is in the first state, the first mating member and the key mating member are not in contact with each other.

12. The keyboard according to claim 11, wherein at least one of the first mating member or the key mating member is arranged with a guiding structure, and when the first mating member moves, the guiding structure guides the first surface to contact and press against the second surface.

13. The keyboard according to any one of claims 1 to 12, wherein the keyboard comprises a plurality of keys, and the driving board comprises the first mating member that cooperates with the second mating member of each key respectively.

14. The keyboard according to claim 13, wherein two sides of the keys are both arranged with the key mating member.

15. The keyboard according to claim 13, wherein the driving board comprises at least one first beam and a plurality of second beams, the first beam and the second beams are orthogonally arranged, the first mating member is arranged on the second beams, and at least one of the keys is arranged between two adjacent second beams.

16. The keyboard according to claim 15, wherein the driving board comprises a plurality of first beams, two adjacent first beams and two adjacent second beams are enclosed to form a through hole, the driving board comprises a plurality of through holes, the plurality of through holes and the plurality of keys are in one-to-one correspondence, and the keys pass through the through holes.

17. The keyboard according to any one of claims 1 to 16, wherein the keyboard base is arranged with a base mating member, and between the base mating member and the second mating member, one is a rail, and the other is a rail groove, wherein the rail and the rail groove are connected by cooperation.

18. The keyboard according to any one of claims 1 to 17, wherein the key further comprises an elastic portion arranged on the keyboard base.

19. The keyboard according to any one of claims 1 to 18, wherein the keyboard comprises a keyboard panel, the keyboard panel and the keyboard base are enclosed to form a housing of the keyboard, the driving portion drives the key to the second state, and a height of the key is not higher than a height of the keyboard panel.

20. A keyboard, comprising a keyboard base and a key, the key comprising a keycap and a key holder, wherein the keyboard further comprises a driving portion, the driving portion comprises a control member and a first mating member, the key is arranged with a second mating member, the first mating member is arranged on the keyboard base, and the control member controls at least one of the first mating member or the second mating member to generate a magnetic force to absorb each other and drive the key to descend.

21. The keyboard according to claim 20, wherein the keyboard comprises a plurality of keys, and the control member controls at least one of the first mating members or the second mating members to simultaneously generate magnetic forces or simultaneously lose the magnetic forces.

22. An electronic device, comprising the keyboard according to any one of claims 1 to 21.

23. The electronic device according to claim 22, wherein the electronic device is a notebook computer.
